Europäisches Patentamt

European Patent Office

Office européen des brevets

(11) Veröffentlichungsnummer: **0 343 672**
**A1**

## (12) EUROPÄISCHE PATENTANMELDUNG

(21) Anmeldenummer: 89109474.0

(22) Anmeldetag: 26.05.89

(51) Int. Cl.⁴: **B01D 53/34**

(30) Priorität: 26.05.88 CS 3593/88

(43) Veröffentlichungstag der Anmeldung:
29.11.89 Patentblatt 89/48

(84) Benannte Vertragsstaaten:
AT BE CH DE ES FR GB IT LI NL SE

(71) Anmelder: JEDNOTNE ZEMEDELSKE
DRUZSTVO PODHAJI
se sidlem v Lutonine
PSC 763 13(CS)

(72) Erfinder: Smély, Zdenek, Dipl.-Ing.
Ostromecská 395/5
Praha 3(CS)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) **Verfahren und Einrichtung zur Reinigung der Gasgemische von schweren Kohlenwasserstoffen und deren Derivaten.**

(57) Die Erfindung richtet sich auf ein Verfahren und eine Einrichtung zur Reinigung von Gasgemischen, insbesondere von Rauchgasen der Müllverbrennungsanlagen, von schweren Kohlenwasserstoffen und deren Derivaten, vor allem von organischen toxischen und cancerogenen Verbindungen aus der Gruppe der Dioxine nach eventueller Abkühlung und/oder nach Vorabscheidung von festen dispergierten Teilchen und von den üblichen Schadstoffen, wie zum Beispiel von Schwefeldioxid, Schwefeltrioxid, Stickstoffoxiden, Chlorwasserstoff und anderen einfachen Verbindungen von Halogenelementen.

Das erfindungsgemäße Verfahren weist das Kennzeichen auf, daß eine Dispersion natürlicher und/oder synthetischer Kohlenwasserstoffe, insbesondere Mineralöle, Oligomere, Kunststoffe und Elastomere, mit einem oder mehreren Elementen in Kombination, in Berührung mit einem Strom der der Reinigung unterworfenen Gasgemische durch Zerstreuung oder Herabfließen auf Trägern oder Durchwirbeln, gebracht wird, wodurch die Abscheidung der organischen toxischen und cancerogenen Verbindungen aus den Gasgemischen infolge ihrer Affinität zu den Elementen der angeführten Dispersionen der Kohlenwasserstoffe erreicht wird.

FIG.1

## Verfahren und Einrichtung zur Reinigung der Gasgemische von schweren Kohlenwasserstoffen und deren Derivaten

Die Erfindung betrifft ein Verfahren und eine Einrichtung zur Reinigung der Gasgemische, insbesondere der Rauchgase aus Müllverbrennungsanlagen, von schweren Kohlenwasserstoffen und deren Derivaten, vor allem von organischen toxischen und cancerogenen Verbindungen aus der Gruppe der Dioxine.

Es sind mehrere Verfahren und Einrichtungen zur Gasreinigung vor allem der Abgase von Kesseln, energetischen und thermalen Anlagen bekannt,die einer fast vollständigen Abscheidung oder wenigstens einer bedeutsamen Herabsetzung des Inhalts von verschiedenen Schadstoffen dienen und die in steigendem Masse im Interesse des Umweltschutzes und der Pflege um die Luftreinheit angewendet werden. Es handelt sich vor allem um die Lösung der bereits zum Weltproblem gewordenen Beseitigung von Exhalationen der Schwefeldioxide, Schwefeltrioxide, Stickstoffoxiden, Chlorwasserstoff, Chlor und dessen Oxiden. Aus der chemischen Industrie, aus den Stahlwerken und aus einer Reihe von Industrieanlagen in anderen Gebieten entweichen jedoch auch andere Schadstoffe, zum Beispiel Schwefelwasserstoff, Ammoniak, Schwefelkohlenstoff, niedermolekulare Kohlenwasserstoffe und deren Derivate, wie Aldehyde, Ketone, Halogenide usw. Selbst in solchen Fällen, wo der Gasumfang nach Grössenordnung niedriger als bei grossen Rauchgasquellen zu sein pflegt, sind zahlreiche Methoden der Separation und Liquidierung oder Ausnützung von Schadstoffen bekannt.

In den letzten Jahren treten zwei neue Gruppen von toxischen Stoffen in den Vordergrund: es handelt sich vor allem um cancerogene Stoffe von verschiedenem Gefährlichkeitsgrad. Diese Schadstoffe sind am meisten repräsentiert durch schwere aromatische Kohlenwasserstoffe mit kumulierten aromatischen Ringen, mit den verschiedensten Seitenketten, durch Gruppen heteroatomaren Charakters, die sowohl an aromatische als auch an aliphatische Molekülteile gebunden sind. Die andere besonders gefährliche Gruppe sind Stoffe von Typ Dioxin, die einen stark ungesättigten, kumulierten thermisch sehr widerstandsfähigen aromatischen Kern besitzen und die gebundenes Chlor oder andere Atome der Halogen-Elemente enthalten. Die Toxizität dieser Stoffe erreicht Werte, wo bereits das Verhältnis von $1{:}1.10^{-15}$ gesundheitsgefährlich werden kann. Das Vorkommen und die Gefährlichkeit dieser Schadstoffe wurden erst mit der Entwicklung der modernen analytischen Technik und der äusserst empfindlichen Methoden zur Feststellung von deren biologischer Aktivität entdeckt.

Beide Klassen der erwähnten aromatischen Kohlenwasserstoffe besitzen eine sehr niedrige Dampfspannung und sind ausserordentlich widerstandsfähig gegen die Wirkung von chemischen Substanzen und gegen Natureinflüsse, so dass sie ihre Toxizität lange Zeit behalten. Aromatische Cancerogene und auch Stoffe vom Typ Dioxin sind in der Regel sehr widerstandsfähig nicht nur chemisch, sondern auch thermisch. Diesen Umstand berüchsichtigt zum Beispiel die Methode der Liquidierung derselben mittels Einwirkung hoher Temperaturen im Oxidationsmedium (Offenlegungsschrift DE 3504810 A1). Eine andere Methode, beschrieben in der Offenlegungsschrift DE 3426059 A1, besteht in der Abscheidung und Beseitigung von organischen Schadstoffen, insbesondere von polychlorierten Dibenzodioxinen aus Rauchgasen mittels thermischer Zersetzung der genannten Stoffe bei einer Temperatur von über 1000° C.

Vorwiegend aromatische Toxine entstehen in kleinen, aber gefährlichen und der Gesundheit abträglichen Mengen insbesondere bei der Verbrennung und Pyrolyse von komplizierten Gemischen von organischen Stoffen einer sehr bunten Zusammensetzung. Die häufigste Quelle sind Müllverbrennungsanlagen zur Verbrennung von Industrie- und Hausabfällen, Krematorien, Heizkraftwerke und energetische Anlagen, in denen ein Teil des geläufigen Brennmaterials (Kohle, Gas, Erdölprodukte) durch den sogenannten Ekobrennstoff oder sogar durch unsortierte Abfälle veränderlicher Zusammensetzung ersetzt wird. Durch die Verbrennung der häufigsten Thermoplaste, zu denen Poly vinylchlorid gehört, besonders im Gemisch mit anderen organischen Substraten, entstehen leicht nicht nur Chlorwasserstoff, Chlor, Chloroxide,sondern auch zahlreiche einfache und komplizierte organische Verbindungen einschliesslich der Stoffe vom Typ Dioxin. Diese Stoffe werden in geringen Gewichtsmengen Bestandteile von Rauchgasen und sind am meisten an feine Aerosolpartikeln gebunden.Zusammen mit den Rauchgasen zerstreuen sie sich in der nahen und mehr entfernten Umgebung ihrer Quellen, insbesondere der Müllverbrennungsanlagen, verpesten die Umgebung, die Luft, das Wasser und auch den Boden; im Boden sammeln sie sich an und können, ähnlich wie Schwermetallverbindungen, zur Devastation und zum gesundheitsschädlichen Zustand dieser Verbrennungsanlagen und der in dieser Sphäre angebauten Agrarprodukte beitragen.

Durch die obgenannten Methoden können Dioxin und dessen Derivate, sowie cancerogene Stoffe liquidiert und unschädlich gemacht werden. Die bisher angeführten Methoden weisen jedoch wichtige Mängel auf. Zum Beispiel die Hochtemperaturverbrennung von Müll auf oberhalb 1200° C führt zwar zu einer markanten Herabsetzung des Inhalts von Schadstoffen, in der Regel tief unter der zulässigen hygienischen Norm, aber diese Art der Liquidierung von Schadstoffen verlangt einen bedeutenden Verbrauch von hochwertigen energetischen Rohstoffen (Gas, Heizöle) und wird zur Liquidierung von kleineren, vom hygienischen Standpunkt besonders nachteiligen Abfällen benützt, besonders aus chemischen Anlagen, Krankenhäusern usw. Die Hochtemperatur- oder sogar Plasma-Verbrennung von kompliziert zusammengesetzten Abfällen bleibt ein Problem, besonders im Falle deren massiven Vorkommens, speziell in grossen Stadtagglomerationen. Die Adsorption von aromatischen Toxinen an oberflächenaktiven Stoffen von Typ Silikagel, Koks, usw. ermöglicht gleichfalls eine beträchtliche Herabsetzung der Konzentrierung dieser Verbindungen in den gereinigten Gasen, aber auch hier machen die Anwesenheit von anderen Schadstoffen in den der Reinigung unterworfenen Gasen, die Verunreinigung des Absorptionsmittels durch Flugasche und andere Nachteile eine einfache und verlässliche Reinigung unmöglich.

Die Beseitigung der erwähnten Mängel kann durch das Verfahren und die dazugehörige Einrichtung zur Reinigung der Gasgemische nach der Erfindung erzielt werden, deren Prinzip darin besteht, dass die Dispersionen der Natur- und/oder synthetischen Kohlenwasserstoffe, insbesondere Mineralöle und deren Derivate, Oligomere, Thermoplaste und Elastomere, und zwar gleichwohl ob ein Element enthaltend oder in gegenseitiger Kombination, durch Zerstreuung oder durch Herabfliessen auf der Trägeroberfläche in Berührung mit einem Strom vom Gasgemisch gebracht werden, insbesondere von Müllverbrennungsabgasen, die schwere Kohlenwasserstoffe und deren Derivate enthalten, vor allem organische toxische und cancerogene Verbindungen aus der Gruppe der Dioxine, und zwar nach eventueller Abkühlung und/oder Vorabscheidung von festen dispergierten Teilchen und von den üblichen Schadstoffen, wie zum Beispiel Schwefeldioxid, Schwefeltrioxid, Stickstoffoxiden, Chlorwasserstoff und anderen einfachen Verbindungen von Halogen- Elementen.

Infolge der physikalisch-chemischen Affinität der organischen toxischen und cancerogenen Verbindungen in den der Reinigung unterworfenen Gasgemischen zu organischen alifatischen und aromatischen Verbindungen und anderen verwandten Elementen der erwähnten Kohlenwasserstoffdispersionen, kommt eine Absorption der toxischen und cancerogenen Verbindungen in die zerstreuten Teilchen dieser Dispersionen zustande, und dadurch erfolgt die Abscheidung der erwähnten Schadstoffe aus den der Reinigung unterworfenen Gasgemischen. Auf diese Weise wird die Detoxikation der Gasgemische vor deren Auslass in die Atmosphäre oder vor deren Benützung erzielt. Dabei ist es notwendig, die organischen Verbindungen in den benützten Dispersionen der Kohlenwasserstoffe gegen Koagulierung und Sedimentation zu stabilisieren; diese organischen Verbindungen enthalten in der Regel ungesättigte molekulare Strukturen, insbesondere mit aromatischen Kernen und/oder mit Atomen von Chlor, oder andere Funktionsgruppen, die ähnlich den Funtiongruppen in toxischen und cancerogenen Verbindungen sind, zum Beispiel auf der Basis von Polystyrol und dessen Kopolymeren, Polyphenylenoxid, Nitrilelastomeren, Chloroprenkautschuk, Polyvinylchlorid, Asphaltenen und anderer Funtionsgruppen, die ähnlich den Funktionsgruppen in toxischen und cancerogenen dioxinischen und aromatischen Verbindungen sind.

Die Effektivität der Lösung bessert sich erfindungsgemäss bei Vorkühlung der Gasgemische auf die Temperatur von 20-60° C oder wenigstens von 100° C und durch die Wahl einer Art der Zerstreuung der Dispersionen der Kohlenwasserstoffe, die dem Bedarf in einem konkreten Falle entspricht, d.h. entweder das Zerspritzen oder Zerstäuben in den Strom der der Abscheidung unterworfenen Gasgemische oder das Zerfliessen und Benetzen der verschiedenartig gegliedertem Oberfläche der Träger, Netze oder anders formierter Elemente. Als Absorptionsmedium der Dispertionsteilchen dienen Mineralöle, Oligomere oder Polymere, Polyolefine, Polyesthere, Polyamide, Polykondensate enthaltend aromatische Kerne, auch halogenierte bzw. anders chemisch adaptierte Kerne, Polystyren, Kautschuke (Butadien-, Butadienstyren-, Natur-, Chloropren-, Akrylonitrilkautschuk usw.), und zwar entweder allein oder in Gemischen mit verschiedenem Molekülgewicht, mit linearer oder verzweigter Struktur, bei Elastomeren auch in Form von Vulkanisaten bei Thermoplasten mit chemisch oder radiationsvernetzten Strukturen usw.

Als einen besonderen Fall kann man erfindungsgemäss ein Verfahren benützen, kombiniert mit der Kalkstein-, Kalk-, Magnesit- oder einer anderen nassen Methode von Abgasentschwefelung, wo zur Dispersion von feingemahlenen Kalksteinteilchen, zum Beispiel Ölemulsion oder eine andere Emulsion, hinzugefügt wird. In diesem Falle können Emulsionen den Dispersionen von Makromolekülpolymeren vorgezogen werden, da dieselben unter bestimmten Bedingungen die Koagulationsanfälligkeit aufweisen, was die Kontinuität der Gasgemisch abscheidung beeinträchtigen würde. Bei der Reinigung der Abgase von aromatischen Toxinen wird das verdampfte Wasser aus der Emulsion oder Dispersion ergänzt,und dann erfolgt der periodische oder kontinuierliche Austausch der Emulsion oder der Dispersion selbst, die erfindungsgemäss angewandt wurde, und zwar abhängig vom Inhalt der eingefangenen Dioxine. Da die physikalisch-chemische Affinität der aromatischen Cancerogene und der Stoffe vom Typ Dioxin zu organischen Verbindungen gemäss der Erfindung hoch ist und die absolute Konzentration dieser Toxine in den der Reinigung unterworfenem Gasen bis auf Ausnahmen Einheiten in der Grössenordnung von "part per trillion" ausmacht, können die benützten Dispersionen einmal in einigen Monaten ausgetauscht werden, wenn nicht noch seltener. Die organische Substanz der benützten Dispersionen wird am besten durch pH - Änderung ausgefällt, und die koagulierte Masse kann auf einem ökoligisch sicheren Ort gelagert oder durch Verbrennung in einer Hochtemperatur- bzw. Plasmaverbrennungsanlage liquidiert werden.

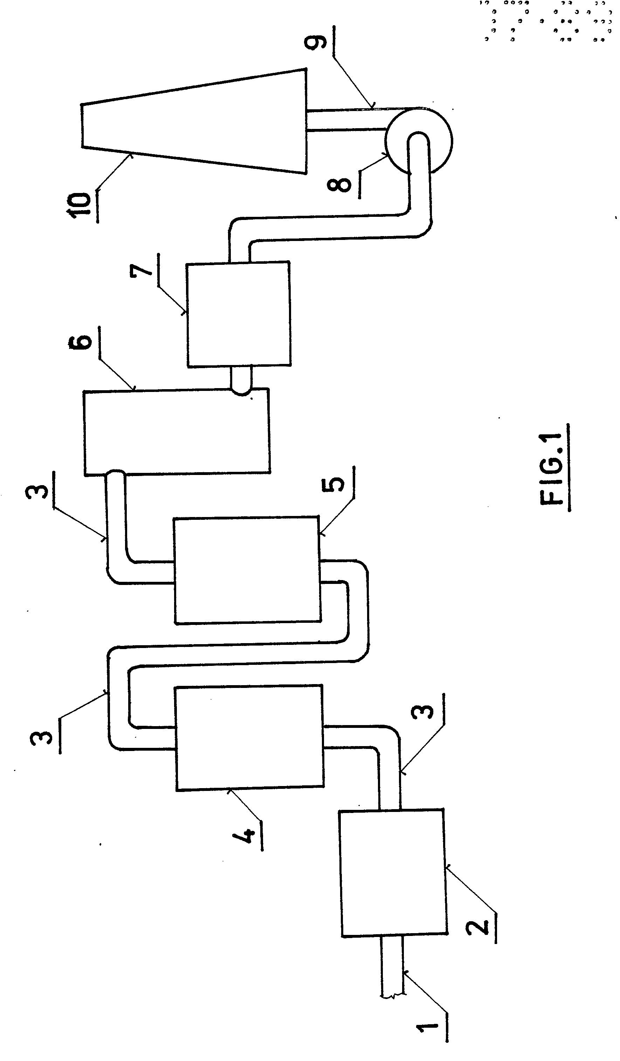

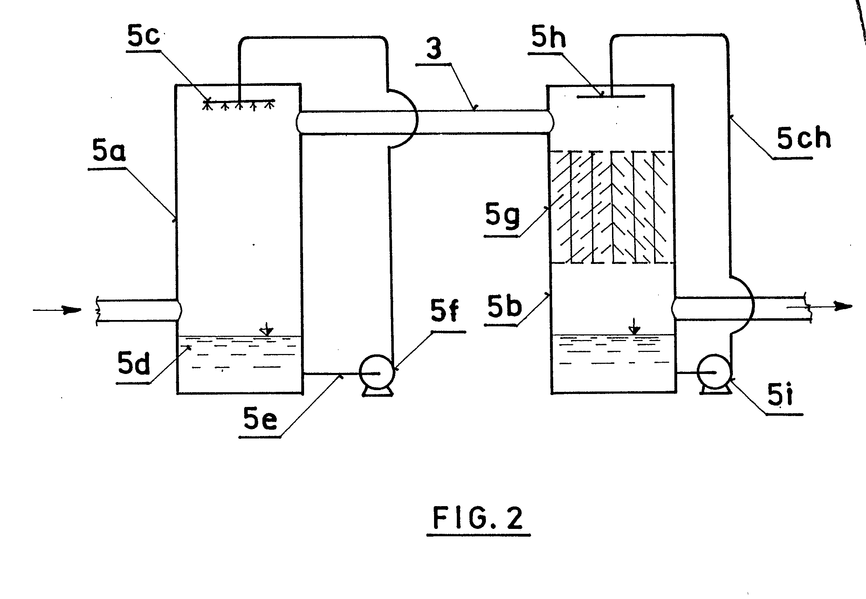

Die Einrichtung zum Verfahren im Sinne der Erfindung ist schematisch dargestellt in Fig. 1 mit einem Beispiel der Ausführung der Gesamtzusammensetzung und in Fig. 2 mit einem Beispiel der Ausführung der eigentlichen Reinigungsgruppe; und deren Anordung ist in einem konkreten Fall wie folgt: Die Ansaugzuführung 1 des Gasgemisches tritt in den Separator 2 ein (z.B. Elektrofilter), der aus diesem Gasgemisch die festen Teilchen abscheidet, von hier aus ist eine Verbindungsleitung 3 installiert, die in den Vorabscheidungsknoten 4 mündet zwecks Einfang von üblichen Schadstoffen insbesondere von Schwefeldioxid, Stickstoffoxiden, Fluor- und Chlorwasserstoff und weiter zur eigentlichen Reinigungsgruppe 5 führt zwecks Einfang von organischen toxischen und cancerogenen Verbindungen; die Verbindungsleitung 3 führt dann in den Abscheider 6 für den Einfang von den aus der Reinigungsgruppe 5 mitgerissenen Teilchen und weiterhin in den Erwärmer 7 der gereinigten Gasgemische und dann in die Gebläseeinrichtung 8, von der aus die Ableitung 9 installiert ist, die in den Kamin 10 mündet.

Die eigentliche Reinigungsgruppe 5 besteht aus einem Streuungsabscheider 5a, einem Abströmungsabscheider 5b, wobei im Streuungsabscheider 5a Streuungsdüsen 5c angebracht sind für die Zerstäubung der Kohlenwasserstoff-Dispersionen bzw. der Dispersionen der Entschwefelungs- oder Denitrifikationsmittel, während die Verbindungsleitung 3 zur Zuführung von vorgereinigten Gasgemischen in den Raum innerhalb des Streuungsabscheiders 5a oberhalb des Niveaus der Vorratsdispersion 5d der Kohlenwasserstoffe dient; zur Sicherung des Kreislaufs dieser Dispersion führt eine Kreislaufleitung 5e mit eingebauter Pumpe 5f, die vom unteren Teil des Streuungsabscheiders 5a ausgeht und in den oberen Teil des Streuungsabscheiders 5a zu den Zerstreuungsdüsen 5c mündet. Von diesem Streuungsabscheider 5a führt ein weiterer Teil der Verbindungsleitung 3 in den oberen Teil des Abströmungsabscheiders 5b, in dem Träger 5g installiert sind mit schrägen oder senkrechten Lamellen bzw. mit Lamellen, die gelöchert oder anders adaptiert sind, um eine äusserst grosse Oberfläche zu erzielen, wobei oberhalb dieser Träger 5g Verteiler 5h für eine gleichmässige Benetzung der Träger 5g installiert sind; zur Sicherung der Zirkulation der Dispersion von Kohlenwasserstoffen ist auch vom unteren Teil des Abströmungsabscheider 5b eine Zirkulationsleitung 5ch mit eingebautem Pumpelement 5i hinausgeführt, die zum Verteiler 5h führt. Von der Reinigungsgruppe 5 folgt ein weiterer Teil der Verbindungsleitung 3 in den Abscheider 6 der fein verteilten flüssigen Teilchen der Dispersionen und von dort weiter zum Erwärmer 7 der gereinigten Gasgemische, der an den Austrittabzug 9 der gereinigten Gasgemische angeschlossen ist zwecks deren Ablass in den Kamin 10 oder einer weiteren Ausnützung.

Wenn es der konkrete Bedarf erfordert, kann die Reinigungsgruppe 5 in einem vereinfachten Umfang angewendet werden, d.h. entweder bloss in form eines Streuungsabscheiders 5a oder nur als Abströmungsabscheider 5b.

## Ansprüche

1. Verfahren zur Reinigung von Gasgemischen, insbesondere von Rauchgasen der Müllverbrennungsanlagen, von schweren Kohlenwasserstoffen und deren Derivaten, vor allem von organischen toxischen und cancerogenen Verbindungen aus der Gruppe der Dioxine nach eventueller Abkühlung und/oder nach Vorabscheidung von festen dispergierten Teilchen und von den üblichen Schadstoffen, wie zum Beispiel von Schwefeldioxid, Schwefeltrioxid, Stickstoffoxiden, Chlorwasserstoff und anderen einfachen Verbindungen von Halogenelementen,
**dadurch gekennzeichnet,**
daß eine Dispersion natürlicher und/oder synthetischer Kohlenwasserstoffe, insbesondere Mineralöle, Oligomere, Kunststoffe und Elastomere, mit einem oder mehreren Elementen in Kombination, in Berührung mit einem Strom der der Reinigung unterworfenen Gasgemische durch Zerstreuung oder Herabfließen auf Trägern oder Durchwirbeln, gebracht wird, wodurch die Abscheidung der organischen toxischen und cancerogenen Verbindungen aus den Gasgemischen infolge ihrer Affinität zu den Elementen der angeführten Dispersionen der Kohlenwasserstoffe erreicht wird.

2. Verfahren nach Anspruch 1,
dadurch gekennzeichnet,
daß die organischen Verbindungen in den benützten Dispersionen der Kohlenwasserstoffe gegen Koagulation und Sedi mentation stabilisiert werden und ungesättigte molekulare Strukturen, insbesondere mit aromatischen Kernen und/oder mit Atomen von Chlor und anderen Halogenelementen auf der Basis des Polystyrols und dessen Kopolymere, des Polyphenyloxids, der Nitrilelastomere, der Chloroprenkautschuke, des Polyvinylchlorids, deren Asphaltene bzw. weiterer Polymere mit chemisch substituierten Funktionsgruppen enthalten, die analog den Funktionsgruppen in den toxischen und cancerogenen dioxinischen und aromatischen Verbindungen sind.

3. Verfahren nach Anspruch 1 oder 2,
dadurch gekennzeichnet,
daß die benützten Dispersionen in den Strom der der Reinigung unterworfenen Gasgemische zerstreut und/oder zerstäubt werden oder man sie herabfließen und eine verschiedenartig gegliederte Oberfläche der Träger, von Netzen oder anders gearteten Elementen sowohl im Gleichstrom als auch im Gegenstrom benetzen läßt.

4. Verfahren nach einem der Ansprüche 1 bis 3,
dadurch gekennzeichnet,
daß die Dispersionen der natürlichen und/oder synthetischen Kohlenwasserstoffe in Berührung mit dem Strom der der Reinigung unterworfenen Gasgemische gleichzeitig mit Dispersionen von Entschwefelungs- und/oder Denitrifikationsmitteln gebracht werden, die z. B. Calciumcarbonat, Magnesiumhydroxid, Magnesiumkarbonat und/oder Calciumhydroxid enthalten.

5. Verfahren nach einem der Ansprüche 1 bis 4,
dadurch gekennzeichnet,
daß aus der funktionell erschöpften Dispersion mit eingefangenen toxischen und cancerogenen Verbindungen nach periodischem oder durchlaufendem Austausch gegen neue die dispergierte Phase abgeschieden wird, die danach an einem ökologisch zulässigen Ort als toxischer Abfall gelagert oder durch Hochtemperatur- oder Plasmaverbrennung beseitigt wird.

6. Einrichtung zur Durchführung des Verfahrens nach einem der Ansprüche 1 bis 5, bestehend aus einer Ansaugzuleitung des Gasgemisches, die in einen Separator eintritt, der aus diesem Gasgemisch die festen Teilchen abscheidet, aus einem Vorabscheidungsknoten zur Abscheidung der üblichen Schadstoffe und aus einer eigentlichen Reinigungsgruppe, **dadurch gekennzeichnet,**
daß die Reinigungsgruppe (5) zur Abscheidung von organischen und cancerogenen Verbindungen aus einem Streuungsabscheider (5a), der mittels einer Verbindungsleitung (3) an den Vorabscheidungsknoten angeschlossen ist und in dem Zerstreuungsdüsen (5c) installiert sind für die Zerstäubung oder eine andersartige Zerstreuung von Dispersionen von Kohlenwasserstoffen und eventuell von Dispersionen von Entschwefelungs- und/oder Denitrifikationsmitteln und aus einem Abströmungsabscheider (5b) besteht, der durch eine Fortsetzung der Verbindungsleitung (3) an den Streuungsabscheider (5a) angeschlossen ist und in dem Träger (5g) angebracht sind, die schräge oder senkrechte bzw. gelöcherte Lamellen besitzen oder anders zwecks Erreichung einer möglichst großen Oberfläche geartet sind, wobei oberhalb dieser Träger (5g) Verteiler (5h) für die gleichmäßige Benetzung der Träger (5g) installiert sind, und daß von der Reinigungsgruppe (5) ein weiterer Teil der Verbindungsleitung (3) in den Abscheider (6) der zerstreuten flüssigen Teilchen der Dispersionen und von da weiter in einem Erwärmer (7) der gereinigten Gasgemische folgt, der an einen Austrittabzug (9) der gereinigten Gasgemische zwecks deren Auslaß in den Kamin (10) oder deren weiterer Ausnützung angeknüpft ist.

7. Einrichtung nach Anspruch 6,
dadurch gekennzeichnet,
daß die Reinigungsgruppe (5) bloß aus einem Abscheider besteht, der je nach Bedarf der gegebenen Zusammensetzung der zu reinigenden Gasgemische entweder der Streuung (5a) oder der Abströmung (5b) dient, daß vom unteren Teil des Streuungsabscheiders (5a) eine Kreislaufleitung (5e) mit eingebauter Pumpe (5b) ausgeht, die in den oberen Teil desselben zu Zerstreuungsdüsen (5c) zwecks Sicherung der Zirkulation der Dispersionen oder deren Ergänzung mündet, und daß ähnlicherweise vom unteren Teil des Abströmungsabscheiders (5b) eine Zirkulationsleitung (5ch) mit eingebautem Pumpelement (5i) ausgeht, die in den Verteiler (5h) im oberen Teil desselben Abströmungsabscheiders (5b) mündet.

FIG.1

EP 0 343 672 A1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 102 983  (O. YAMASE) * Anspruch 1; Figur * | 1 | B 01 D 53/34 |
| A | | 2-7 | |
| A | US-A-3 488 923  (W. HATCHISON) * Ansprüche * | 1-7 | |
| A | US-A-3 887 340  (Y. HSU) * Ansprüche * | 1-7 | |
| A | EP-A-0 172 288  (DOW) * Ansprüche * | 1-7 | |
| A | US-A-3 485 577  (P. KRAUS) * Anspruch 1 * | 1 | |
| A | EP-A-0 255 022  (HOECHST) * Ansprüche * | 1-7 | |
| A | EP-A-0 201 881  (DOW) * Ansprüche * | 1-7 | RECHERCHIERTE SACHGEBIETE (Int. Cl.4) |
| A | EP-A-0 253 563  (NIRO ATOMIZER) * Ansprüche * | 4 | B 01 D |

Der vorliegende Recherchenbericht wurde für alle Patentansprüche erstellt

| Recherchenort | Abschlußdatum der Recherche | Prüfer |
|---|---|---|
| DEN HAAG | 17-08-1989 | KANOLDT W.W. |